# EUROPÄISCHE PATENTSCHRIFT

(11) **EP 1 479 467 B1**
(45) Veröffentlichungstag und Bekanntmachung des Hinweises auf die Patenterteilung: **10.10.2007**
(21) Anmeldenummer: 04011938.0
(22) Anmeldetag: 19.05.2004
(51) Int. Cl.: B23C 3/12, B23Q 1/54

(54) **Bearbeitungsvorrichtung zur Bearbeitung von Kanten an Stirnseiten von plattenförmigen Werkstücken**
Device for finishing edges on front faces of plate-shaped workpieces
Appareil pour la finition des bords de la face frontale des pièces à usiner en forme de plaque

(30) Priorität: 22.05.2003 DE 20308037 U
(43) Veröffentlichungstag der Anmeldung: 24.11.2004
(73) Patentinhaber: OTT Verwaltungs GmbH, 4650 Lambach (AT)
(72) Erfinder: Pittrich, Gerhard, 4702 Wallern an der Trattnach (AT); Kaser, Hans, 4871 Aichkirchen Nr. 38 (AT)
(74) Vertreter: Hano, Christian

(56) Entgegenhaltungen:
- EP-A- 0 997 245
- EP-A- 1 302 287
- DE-A- 4 136 441
- US-A- 4 019 256
- US-A- 4 991 637

## Beschreibung

Die Erfindung betrifft eine Bearbeitungsvorrichtung zur Bearbeitung von Kanten an Stirnseiten von plattenförmigen Werkstücken nach dem Oberbegriff des Patentanspruchs 1.

Es sind Bearbeitungsvorrichtungen bekannt, die als Bearbeitungsaggregat z.B. ein Fräsaggregat zum Verrunden der vorderen und hinteren Stirnseiten eines durchlaufenden Werkstücks oder ein Kappaggregat zum Ablängen vorderer und hinterer Kantenüberstände an den Werkstücken umfassen.

Bei herkömmlichen Bearbeitungsaggregaten, die die Kopierbewegung durch ein Parallelogramm bewerkstelligen, sind die Parallelogramme für die vordere bzw. hintere Bearbeitung getrennt angeordnet. Jedes Bearbeitungsaggregat ist an ersten Enden von zwei parallelen Lenkern angelenkt, die mit ihrem anderen Ende an einem gestellfesten Lagerelement angelenkt sind. Bei diesem Aufbau sind somit für eine obere Bearbeitung zwei Bearbeitungsaggregate erforderlich, ebenso für eine untere Bearbeitung, was insgesamt sehr aufwendig ist

Andere Lösungen, die imstande sind, mit einem Bearbeitungsaggregat eine vordere und eine hintere Stirnseite zu bearbeiten, sind bekannt, doch sind diese steuerungstechnisch sehr aufwendig bzw. erlauben keine hohen Durchlaufgeschwindigkeiten der Werkstücke (z.B. Linearachsen, die schräg oder längs und quer zur Förderrichtung des Werkstücks angeordnet sind.

Die US-A- 4 019 256 beschreibt eine Führung für ein Werkzeug, wie z.B. eine Säge, an deren Halter zwei im Abstand zueinander angeordnete erste Schwenkpunkte vorgesehen sind. Zwei erste parallele Lenker sind mit einem Ende jeweils an einem der ersten Schwenkpunkte angelenkt und mit ihrem anderen Ende jeweils an einer von zwei Rollen angelenkt. Zwei zweite parallele Lenker sind mit einem Ende jeweils ebenfalls an einer der Rollen angelenkt. Die anderen Enden der zweiten Lenker sind jeweils an einem von zwei vierten Schwenkpunkten an einer Winkeleinstellplatte angelenkt, die mit Hilfe eines geraden Kantenelements an der Kante eines Werkstücks befestigt ist. Die Rollen haben den gleichen Durchmesser und tangieren einander, wobei sie so angeordnet sind, dass sie in entgegen gesetzte Richtungen drehen. Dies wird durch ein die Rollen umlaufendes Band sichergestellt.

In der DE 41 36 441 A ist ein Lenksystem zur Erzeugung horizontaler und vertikaler Bewegungen eines Werkzeugträgers beschrieben. An dem Werkzeugträger sind zwei im Abstand zueinander angeordnete erste Schwenkpunkte vorgesehen, an denen zwei erste parallele Lenker jeweils mit einem Ende angelenkt sind. Mit ihrem anderen Ende sind die ersten Lenker jeweils an einem von zwei zweiten Schwenkpunkten an einem ersten Lagerelement angelenkt, an dem auch zwei zweite parallele Lenker mit einem Ende angelenkt sind, wobei ein erster und ein zweiter Lenker um den gleichen Schwenkpunkt drehen. Mit dem anderen Ende sind die zweiten Lenker jeweils an einem von zwei vierten Schwenkpunkten an einem gestellfesten Lagerelement angelenkt. Die Vertikal- oder Horizontalbewegung des Werkzeugs wird durch eine Zwischenplatte erreicht, die an einem zweiten Hebel angelenkt ist. Das andere Ende der Zwischenplatte ist über eine Stange mit einem ersten Lenker gelenkig verbunden. An der Zwischenplatte greifen außerdem zwei Druckmittelzylinder aus unterschiedlichen Richtungen an.

Der Erfindung liegt die Aufgabe zugrunde, mit konstruktiv einfachen Mitteln eine Bearbeitungsvorrichtung mit geringer Baugröße zu schaffen, mit dem hohe Durchlauf geschwindigkeiten und ein hoher Automatisierungsgrad möglich sind.

Diese Aufgabe wird erfindungsgemäß durch eine Bearbeitungsvorrichtung mit den Merkmalen des Patentanspruchs 1 gelöst. Vorteilhafte Weiterbildungen der erfindungsgemäßen Bearbeitungsvorrichtung sind Gegenstand der Patentansprüche 2 bis 7.

Aufgrund der erfindungsgemäßen Anlenkung durch das von den Lenkern gebildete Doppelparallelogramm kann das Bearbeitungsaggregat nur parallel zur zu bearbeiteten Stirnseite des Werkstücks bewegt werden. Deswegen ist für die verschiedenen Verstellungen des Bearbeitungsaggregats eine klare Zuordnung des Fräswerkzeugs zur Kontur des Werkstücks gegeben. Außerdem kann mittels nur einen Bearbeitungsaggregats eine vordere und hintere Kante bearbeitet werden. Schließlich ist der Raumbedarf der Bearbeitungsvorrichtung gering.

Die erfindungsgemäße Bearbeitungsvorrichtung weist zweckmäßigerweise an der dem Werkstück zugewandten Seite des Bearbeitungsaggregats eine Tasteinrichtung mit Tastrolle zur Ertastung der Werkzeugoberfläche und Tastring zur Ertastung der zu bearbeitenden Werkstückstirnseite angebracht ist.

Das Bearbeitungsaggregat kann ein Fräsaggregat zum Verrunden der vorderen und hinteren Stirnseiten der Werkstücke oder auch ein Kappaggregat zum Ablängen vorderer und hinterer Kantenüberstände an den Werkstücken sein.

Ein Ausführungsbeispiel der Erfindung wird nachstehend anhand von Zeichnungen näher erläutert. Es zeigen:
- Fig. 1: eine Stirnansicht einer Längsseite eines plattenförmigen Werkstücks, auf die eine Kante aufgeleimt ist,
- Fig. 2: eine perspektivische Darstellung eines Fräsaggregats einer Bearbeitungsvorrichtung,
- Fig. 3: eine Seitenansicht des Fräsaggregats von Fig. 2,
- Fig. 4: eine hintere Stirnansicht des Fräsaggregats von Fig. 2 wobei Verstellbzw. Zustellantriebe weggelassen sind,
- Fig. 5: eine vergrößerte Teilansicht von Fig. 4,
- Fig. 6: den Schnitt V-V von Fig. 4.

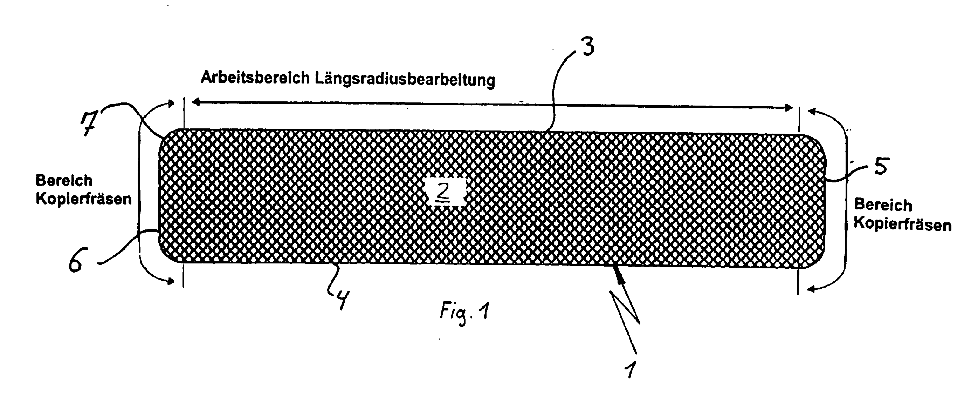

Fig. 1 zeigt die Längsstirnseite eines plattenförmigen Werkstücks 1 aus Holz, z.B. einer Spanplatte, auf die eine Kante 2 aufgeleimt ist. Die Kante 2 muss nach dem Aufleimen an den Längsrändern 3, 4 durch Längsradiusbearbeitung und an den Seitenrändern durch Kopierfräsen bearbeitet werden, wobei im Übergangsbereich zwischen Längs- und Seitenrändern Verrundungen 7 vorgesehen werden.

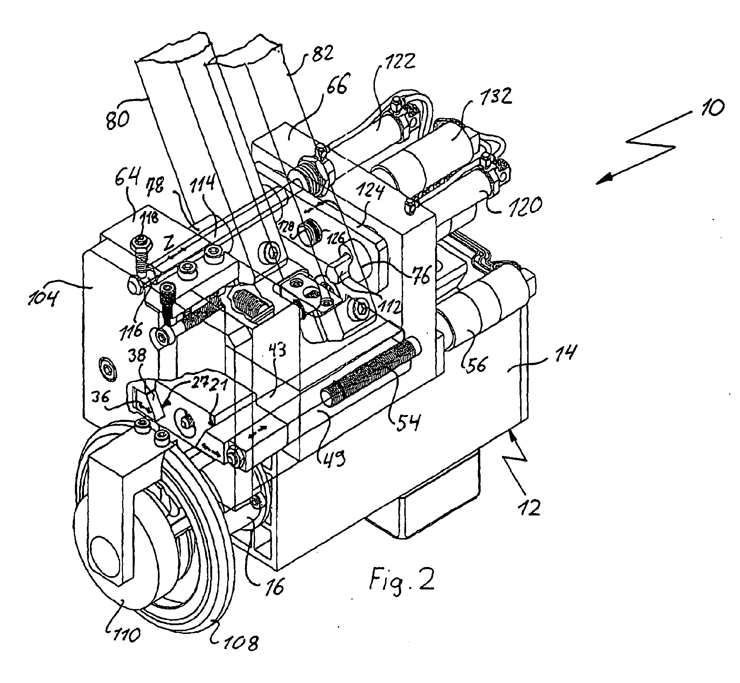

Das in den Fig. 2 bis 6 gezeigte Fräsaggregat 10 weist zur Durchführung dieser Bearbeitung eine Fräsmotoreinrichtung 12 mit einem länglichen quaderförmigen Motorgehäuse 14 auf, in dem ein Antriebsmotor vorgesehen ist. Aus dem Gehäuse 14 steht eine Antriebswelle 16 vor, die senkrecht zu einer Ebene angeordnet ist, in der die Längsstirnseite des plattenförmigen Werkstücks 1 aus Holz liegt, auf die die Kante 2 aufgeleimt ist. Am äußersten Ende der Antriebswelle 16 ist ein Radiusmesserkopf 18 zur Bearbeitung der Ränder der Kante 2 befestigt.

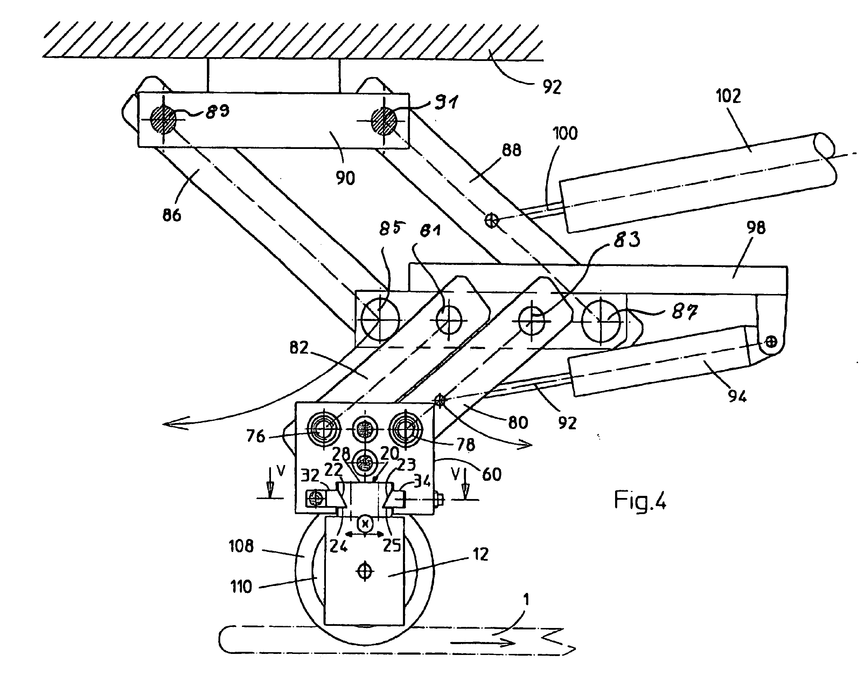

Auf der Oberseite des Motorgehäuses 14 ist eine sich in Längsrichtung (Z-Richtung) des Motorgehäuses 14 erstreckende Führungsleiste 20 angebracht. Wie es in den Fig. 2 und 4 zu erkennen ist, hat die Führungsleiste 20 einen schwalbenschwanzführungsähnlichen Querschnitt. Der Querschnitt ist insgesamt rechteckig, wobei in den beiden gegenüberliegenden Längsseiten der Führungsleiste 20 Konusaussparungen 21 bzw. 27 ausgebildet sind, die jeweils eine horizontale Bodenfläche 24 bzw. 25 aufweisen, von deren inneren Ende sich eine Seitenfläche 22 bzw. 23 in geneigtem Winkel schräg nach oben und nach außen erstreckt.

Die Führungsleiste 20 ist in einer nach unten offenen Ausnehmung 28 einer Fräskopfaufnahmeeinrichtung 30 aufgenommen, deren Form so gestaltet ist, dass sich die Führungsleiste 20 entlang einer an ihr ausgebildeten oberen Gleitfläche 19 an einer Gegengleitfläche 29 der Ausnehmung 28 so bewegen kann, dass eine nötige Verstellmöglichkeit (z.B. 0,3mm) in X-Richtung, d.h. parallel zur aufgeleimten Kante 2, sowie eine größere Bewegungsmöglichkeit (z.B. 3mm) in Z-Richtung, d.h. senkrecht zur Kante 2 ermöglicht wird. Seitlich der Aussparungen 21, 27 sind in der Fräskopfaufnahmeeinrichtung 30 zu den Aussparungen hin offene Nuten 32, 34 ausgebildet.

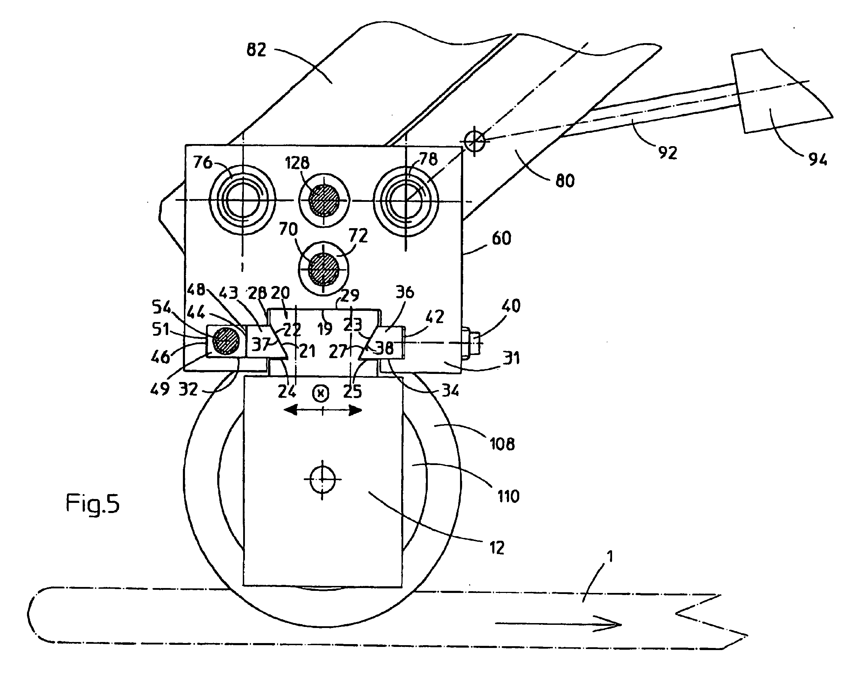

In der in Fig. 4 und 5 rechten Nut 34 ist eine Gegendruckleiste 36 parallel zur Längsstirnseite des Werkstücks 1 (in X-Richtung) verschiebbar angeordnet, die eine Gleitfläche 38 aufweist, die an der Seitenfläche 23 der Führungsleiste 20 anliegt.

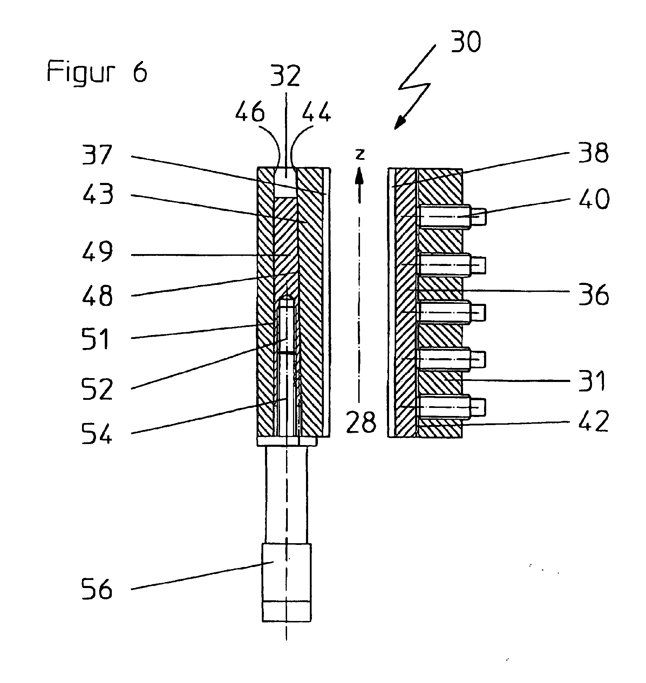

Fig. 6 zeigt den Schnitt V-V von Fig. 4, wobei die Führungsleiste 20 aus Gründen der Übersichtlichkeit weggelassen ist. In der Wandung 31 der Fräskopfaufnahmeeinrichtung 30 sind mehrere Druckelemente 40 senkrecht zur Längsrichtung der Führungsleiste 20 bzw. zur Längsverstellrichtung (Z-Richtung) der Führungsleiste 20 befestigt, die mit ihrem einen Stirnende auf die äußere Seitenfläche 42 der Gegendruckleiste 36 eine Vorspannkraft ausüben.

In die in Fig. 4 linke Aussparung 21 der Führungsleiste 20 greift eine in der Nut 32 horizontal verschiebbar geführte Seitendruckleiste 43 ein, die eine innere Gleitfläche 37 aufweist, die an der Seitenfläche 22 der Führungsleiste 20 anliegt. Die äußere Gleitfläche 44 der Seitendruckleiste 43 verläuft leicht schräg zu der Verstellrichtung Z, wobei sich die Dicke der Seitendruckleiste 43 zum hinteren Ende der Fräskopfaufnahmeeinrichtung 30 hin verringert. Die Steigung beträgt ungefähr 1:10. Zwischen der äußeren Gleitfläche 44 und der Stirnfläche 46 der Nut 32 ist ein Schieber 49 angeordnet, der mit seiner inneren Gleitfläche 48 an der äußeren Gleitfläche 44 der Seitendruckleiste 43 und mit seiner äußeren Gleitfläche 51 an der in Z-Richtung verlaufenden Stirnfläche 46 der Nut 32 anliegt. Die horizontale Breite des Schiebers 49 verringert sich somit nach vorne mit der gleichen Steigung mit der sich die Dicke der Seitendruckleiste 43 erhöht.

In dem hinteren Ende des Schiebers 49 ist eine in Z-Richtung verlaufende Gewindeöffnung 52 vorgesehen, in die eine Verstellspindel 54 eingreift, die von einem Antriebsmotor 56 angetrieben wird, der an der hinteren Stirnseite der Fräskopfaufnahmeeinrichtung 30 befestigt ist.

In der in den Fig. 4 und 5 gezeigten Mittelstellung der Führungsleiste 20 ist zu beiden Seiten der Führungsleiste 20 ein Spiel von ca. 0,5mm zwischen Ausnehmung 28 und Führungsleiste 20 vorhanden. Zwischen der äußere Seitenfläche 42 der Gegendruckleiste 36 und der Wandung 31 existiert dabei ein Spiel von ebenfalls ca. 0,5mm.

Durch den durch die Druckelemente 40 über die Gegendruckleiste 36 seitlich ausgeübten Druck wird die Führungsleiste 20 aufgrund der schrägen Seitenfläche 23 sowohl nach oben auf die Gegengleitfläche 29 der Ausnehmung 28 der Fräskopfaufnahmeeinrichtung 30 als auch auf die gegenüberliegende Gleitfläche 37 der Seitendruckleiste 43 gespannt.

Bei einer Bewegung des Schiebers 49 mittels der Verstellspindel 54 nach vorne wird die Seitendruckleiste 43 und somit auch die Führungsleiste 20 mit der daran befestigten Fräsmotoreinrichtung 12 und die Gegendruckleiste 36 gegen die Vorspannkraft der Druckfedern 40 in X-Richtung nach links bewegt. Bei einer Bewegung des Schiebers 49 nach hinten werden die Gegendruckleiste 36, die Führungsleiste 20 und die Seitendruckleiste 43 durch die Federkraft der Druckelemente 40 in X-Richtung nach rechts bewegt.

Durch die bei der Bewegung in X-Richtung auf die Seitenflächen 22 bzw. 23 der Führungsleiste ausgeübte Kraft wird die Führungsleiste 20 auf die Gleitflächen 19 und 29 gespannt und trotzdem in Z-Richtung frei bewegbar gehalten, so dass eine präzise Achsbewegung in Z-Richtung ebenfalls über die als Gleitflächen ausgebildeten Seitenflächen 22, 23 ohne Beeinflussung oder Behinderung möglich ist. Zur Aufnahme der Krafteinleitung sind die seitlich der Aussparungen 21, 27 offene Nuten 32, 34 in der Fräskopfaufnahmeeinrichtung 30 ausgebildet.

Außerdem ist durch die konstruktive Ausführung der Verstellung mit Spindelantrieb 70 und dem sich mit einer Steigung von 1:10 verjüngenden Schieber 49 eine extrem feinfühlige Untersetzung möglich. Verstellschritte in X-Richtung von 0,005mm können so einfach über eine Steuerung realisiert werden.

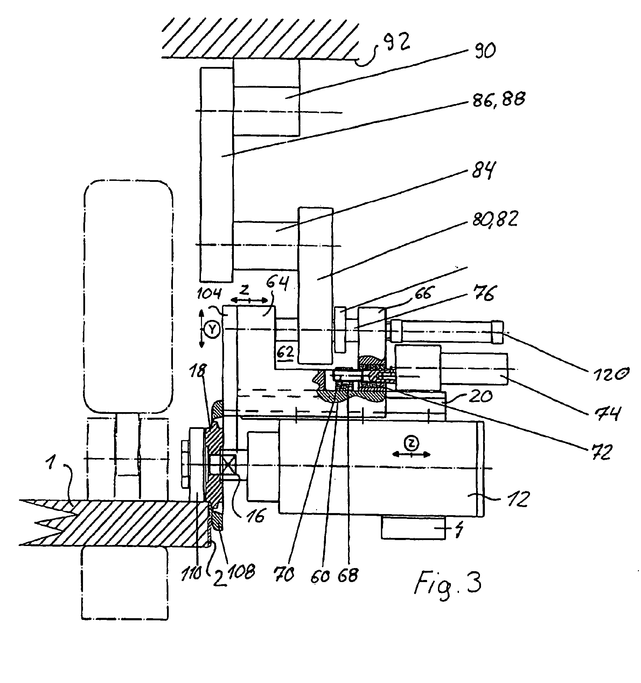

Wie es in Fig. 3 zu erkennen ist, weist die Fräskopfaufnahmeeinrichtung 30 einen insgesamt quaderförmigen Aufnahmekörper 60 auf, in dessen mittleren Bereich eine nach oben offene Aussparung 62 vorgesehen ist, die durch einen vorderen Schenkel 64 und einen hinteren Schenkel 66 begrenzt wird. Zur Feinverstellung der Fräsmotoreinrichtung 12 in Z-Richtung ist auf der Oberseite der Führungsleiste 20 ein Gewindemutterblock 68 im Bereich der Aussparung 62 angeordnet, in dessen Gewindemutter ein vorderes Gewinde einer Verstellspindel 70 eingreift. Ein zweites hinteres Gewinde der Verstellspindel greift in ein Gewinde einer Spindelmutter 72 ein, die in dem hinteren Schenkel 66 angebracht ist. Die Verstellspindel 70 geht durch den hinteren Schenkel 66 hindurch und wird an ihrem hinteren Ende durch einen Spindelantrieb 74 angetrieben, der an der Verstellspindel 70 befestigt und über die Spindelmutter 72 gegen Verdrehung gesichert ist. Durch die entstehende und wirkende Differenz der beiden Gewinde wird eine sehr feinfühlige Verstellung in Z-Richtung erreicht.

Der Aufnahmekörper 60 ist in seinem oberen Bereich in einer horizontalen Ebene auf parallel zueinander im Abstand angeordneten, als Schwenkpunkt dienende Achsen 76, 78 in Z-Richtung verschiebbar gelagert. Zwei erste parallele Lenker 80, 82 sind mit ihrem einen Ende auf der Achse 76 bzw. 78 fest angebracht. Mit ihrem anderen Ende sind die Lenker 80, 82 an einer Lagerplatte 84 an in einer horizontalen Ebene liegenden Schwenkpunkten 81, 83 schwenkbar angelenkt. Auf der anderen Seite der Lagerplatte 84 sind zwei zweite parallele Lenker 86, 88 mit ihrem einen Ende an in einer horizontalen Ebene liegenden Schwenkpunkten 85, 87 angelenkt. Die anderen Enden der Lenker 86, 88 sind an einer weiteren Lagerplatte 90 an in einer horizontalen Ebene liegenden Schwenkpunkten 89, 91 angelenkt. Die Lagerplatte 90 ist an einem Maschinengestell 92 befestigt. Die Schwenkpunktpaare 76, 78; 81, 83; 85, 87 und 89, 91 liegen jeweils in einer parallel zur Oberfläche des zu bearbeitenden Werkstücks 1 verlaufenden Ebene.

Im mittleren Bereich des in Fig. 4 rechten ersten Lenkers 80 ist ein Kolben 92 einer pneumatischen Kolbeneinrichtung 94 angelenkt, die ihrerseits an einem Träger 98 angelenkt ist, der an der ersten Lagerplatte 84 befestigt ist. Auf gleiche Weise ist im mittleren Bereich des in Fig. 4 rechten zweiten Lenkers 88 ein Kolben 100 einer pneumatischen Kolbeneinrichtung 102 angelenkt, wobei die Kolbeneinrichtung 102 mit dem Maschinengestell 92 gelenkig verbunden ist.

An der Stirnseite des Aufnahmekörpers 60 ist eine Aufnahmeplatte 104 so befestigt, dass ihre Höhe in Y-Richtung bezüglich des Aufnahmekörpers 60 durch eine von oben zugänglich Einstellschraube 106 längs einer Führung eingestellt werden kann. An der vorderen Stirnseite der Aufnahmeplatte 104 sind ein den Messerkopf 18 umgebender Tastring 108 und eine Tastrolle 110 so angebracht, dass die Tastrolle 110 bei Bearbeitung der Kante auf dem Werkstück 1 aufliegt und der Tastring 108 an der Längsstirnseite des mit der Kante 2 versehenen Werkstücks 1 anliegt, wie es in Fig. 3 gezeigt ist.

Die Höhe der Aufnahmeplatte 104 in Y-Richtung wird so eingestellt, dass der Messerkopf 18 über dem jeweiligen Längsrand des Werkstücks 1 einen minimalen Überstand von ca. 0,05 bis 0,1 mm belässt, der anschließend durch ein folgendes Ziehklingenaggregat beseitigt wird, um eine saubere und rattermarkenfreie Fläche zu schaffen.

Wie es in Fig. 2 zu erkennen ist, geht durch die Achsen 76, 78 jeweils eine Kolbenstange 112, 114 hindurch, die jeweils mit ihrem vorderen Ende an die Aufnahmeplatte 104 in vorderer bzw. aktivierter Stellung anstoßen und so das gesamte Fräsaggregat 10 in die Arbeitsstellung bringen bzw. über einem im Schenkel 64 befestigten Mitnehmerstift 118, der in eine Vertiefung 116 ragt, die am vorderen Ende der Kolbenstange 112, 114 ausgebildet ist, wieder für eine deaktivierte Stellung zurückziehen.. An ihrem entgegengesetzten Ende ist jede Kolbenstange 112, 114 mit einem pneumatischen Antrieb 120 bzw. 122 verbunden, der in das hintere Ende der Achse 76 bzw. 78 eingeschraubt ist.

Die Achsen 76, 78 gehen zwischen den Lenkern 80, 82 und dem Schenkel 66 durch eine Anschlagplatte 124 hindurch. In der Anschlagplatte 124 ist zwischen den beiden Achsen eine Gewindeöffnung 126 ausgebildet, in die eine Verstellspindel 128 eingreift, die durch den Schenkel 66 hindurchgeht. Das hintere Ende der Verstellspindel 128 ist mit einem Zustellantrieb 132 verbunden.

Bei Betätigung der pneumatischen Antriebe 120, 122 werden die Kolbenstangen 112, 114 nach vorne bewegt, bis die Anschlagplatte 124 an den ersten Lenkern 80, 82 anliegt. Zur Einstellung der Position der Anschlagplatte 124 durch den Zustellantrieb 132 über die Spindel 128 kann somit der Verfahrweg der Kolbenstangen 112, 114 und somit der Verfahrweg der gesamten Fräskopfaufnahmeeinrichtung 30 in Z-Richtung zum Werkstück 1 eingestellt werden. Der Verfahrweg wird dabei so eingestellt, dass der Tastring 108 mit geeignetem Druck an der Kante 2 anliegt. Eine präzise Einstellung auf die Kantenstärke kann durch Verstellung der Anschlagplatte 124 erfolgen.

Die Feinverstellung der relativen Position des Messerkopfes 18 zu dem Tastring 108 in Z-Richtung erfolgt durch Betätigung des Spindelantriebes 74 über die in die Spindelmutter 72 eingreifende Verstellspindel 70, deren äußeres Ende mit dem Gewindemutterblock 68 auf der Führungsleiste 20 in Eingriff steht. Gleichzeitig kann die Fräsmotoreinrichtung 12 mit dem Messerkopf 18 in X-Richtung durch Betätigung des Verstellantriebes 56 fein eingestellt werden.

Wenn das Bearbeitungsaggregat beispielsweise ein Kappaggregat zum Ablängen vorderer und hinterer Kantenüberstände ist, kann an der der Stirnseite eines Werkstückes zugewandten Seite des Bearbeitungsaggregates eine Tasteinrichtung mit Tastfläche zum Abtasten des Werkstückanfangs bzw. Werkstückendes angebracht sein.

## Patentansprüche

1. Bearbeitungsvorrichtung zur Bearbeitung einer Kante an Stirnseiten plattenförmiger Werkstücke (1), mit einem Bearbeitungsaggregat (10), an dem ein Paar im Abstand zueinander angeordneter erster Schwenkpunkte (76, 78) vorgesehen ist, wobei zwei erste parallele Lenker (80, 82) mit einem Ende jeweils an einem der ersten Schwenkpunkte (76, 78) angelenkt und mit ihrem anderen Ende jeweils an einem Schwenkpunkt eines Paars von zweiten Schwenkpunkten (81, 83) angelenkt sind, und zwei zweite parallele Lenker (86, 88) mit einem Ende jeweils an einem Schwenkpunkt eines Paars von dritten Schwenkpunkten (85, 87) und mit dem anderen Ende jeweils an einem Schwenkpunkt eines Paars von vierten Schwenkpunkten (89, 91) an einem gestellfesten Lagerelement (90) angelenkt sind,
**dadurch gekennzeichnet, dass** die zwei ersten parallelen Lenker (80, 82) mit ihrem anderen Ende an einem gemeinsamen weiteren Lagerelement (84) angelenkt sind, an dem auch die zwei zweiten parallelen Lenker (86, 88) mit ihrem einem Ende gelagert sind, und dass die beiden Schwenkachsen jeweils eines Paars der ersten (76, 78), zweiten (81, 83), dritten (85, 87) und vierten Schwenkpunkte (89, 91) in einer zur Werkstückoberfläche parallelen Ebene verlaufen.

2. Vorrichtung nach Anspruch 1, **dadurch gekennzeichnet, dass** an der dem Werkstück (1) zugewandten Seite des Bearbeitungsaggregats (10) eine Tasteinrichtung mit Tastrolle (110) zur Ertastung der Werkstückoberfläche und Tastring (108) zur Ertastung der zu bearbeitenden Werkstückstirnseite angebracht ist.

3. Vorrichtung nach Anspruch 1 oder 2, **dadurch gekennzeichnet, dass** das Bearbeitungsaggregat ein Fräsaggregat (10) zum Verrunden der vorderen und hinteren Stirnseiten der Werkstücke ist.

4. Vorrichtung nach Anspruch 1, **dadurch gekennzeichnet, dass** an der der Stirnseite eines Werkstückes (1) zugewandten Seite des Bearbeitungsaggregates (10) eine Tasteinrichtung mit Tastfläche zum Abtasten des Werkstückanfangs bzw. Werkstückendes angebracht ist.

5. Vorrichtung nach Anspruch 1 oder 4, **dadurch gekennzeichnet, dass** das Bearbeitungsaggregat ein Kappaggregat zum Ablängen vorderer und hinterer Kantenüberstände an den Werkstücken ist.

6. Vorrichtung nach einem der vorhergehenden Ansprüche, **dadurch gekennzeichnet, dass** einer der ersten Lenker (80) mit einem ersten Schwenkantrieb (94) und einer der zweiten Lenker (88) mit einem zweiten Schwenkantrieb (102) verbunden ist.

7. Vorrichtung nach Anspruch 6, **dadurch gekennzeichnet, dass** wenigstens einer der Schwenkantriebe von einer pneumatischen Kolbeneinrichtung (94, 102) gebildet wird.

## Claims

1. A machining apparatus for machining an edge at the end faces of board-like workpieces (1), comprising a machining assembly (10) on which is provided a pair of spaced apart first pivot points (76,78), wherein two first parallel links (80,82) are each articulated at one end to one of the first pivot points (76,78) and at their other end are each articulated to one pivot point of a pair of second pivot points (81,83), and two second parallel links (86,88) are each articulated at one end to a pivot point of a pair of third pivot points (85,87) and at the other end are each articulated to a pivot point of a pair of fourth pivot points (89,91) on a fixed bearing element (90), **characterised in that** the two first parallel links (80,82) are articulated at their other end to a common further bearing element (84), on which also the two second parallel links (86,88) are mounted at one end, and **in that** the two pivot axes of each pair of first (76,78), second (81,83), third (85,87) and fourth pivot points (89,91) extend in a plane parallel to the workpiece surface.

2. An apparatus according to Claim 1, **characterised in that** on the side of the machining assembly (10) facing the workpiece (1) there is mounted a sensing device with a sensing roller (110) for sensing the surface of the workpiece and a sensing ring (108) for sensing the endface of the workpiece to be machined.

3. An apparatus according to Claim 1 or 2, **characterised in that** the machining assembly is a milling assembly (10) for rounding the front and rear end faces of the workpieces.

4. An apparatus according to Claim 1, **characterised in that** on the side of the machining assembly (10) facing the end face of a workpiece (1) there is mounted a sensing device with a sensing surface for sensing the start of the workpiece or end of the workpiece.

5. An apparatus according to Claim 1 or 4, **characterised in that** the machining assembly is a cutting-off unit for cutting to length front and rear projecting edges on the workpieces.

6. An apparatus according to any one of the preceding Claims, **characterised in that** one of the first links (80) is connected to a first pivoting drive (94) and one of the second links (88) is connected to a second pivoting drive (102).

7. An apparatus according to Claim 6, **characterised in that** at least one of the pivoting drives is formed by a pneumatic piston device (94,102).

## Revendications

1. Dispositif d'usinage pour usiner un chant sur des côtés frontaux de pièces à usiner (1) en forme de plaque, comprenant un agrégat d'usinage (10) sur lequel est prévue une paire de premiers points de pivotement (76, 78) situés à une distance l'un de l'autre, deux premières bielles parallèles (80, 82) étant articulées à chaque fois, par une extrémité, sur un des premiers points de pivotement (76, 78) et à chaque fois, par leur autre extrémité, sur un point de pivotement d'une paire de deuxièmes points de pivotement (81, 83) et deux deuxièmes bielles parallèles (86, 88) étant articulées à chaque fois, par une extrémité, sur un point de pivotement d'une paire de troisièmes points de pivotement (85, 87) et à chaque fois, par l'autre extrémité, sur un point de pivotement d'une paire de quatrièmes points de pivotement (89, 91) sur un élément de support (90) fixe sur le châssis, **caractérisé en ce que** les deux premières bielles parallèles (80, 82) sont articulées, par leur autre extrémité, sur un autre élément de support commun (84) sur lequel les deux deuxièmes bielles parallèles (86, 88) sont montées également par une de leurs extrémités, et **en ce que** les deux axes de pivotement d'une paire respective des premiers (76, 78), deuxièmes (81, 83), troisièmes (85, 87) et quatrièmes (89, 91) points de pivotement s'étendent dans un plan parallèle à la surface de la pièce à usiner.

2. Dispositif selon la revendication 1, **caractérisé en ce qu'**un dispositif palpeur comprenant un galet palpeur (110) pour palper la surface de la pièce à usiner et un anneau palpeur (108) pour palper le côté frontal de la pièce à usiner est monté sur le côté de l'agrégat d'usinage (10) tourné vers la pièce à usiner (1).

3. Dispositif selon la revendication 1 ou 2, **caractérisé en ce que** l'agrégat d'usinage est un agrégat de fraisage (10) servant à arrondir les côtés frontaux avant et arrière des pièces à usiner.

4. Dispositif selon la revendication 1, **caractérisé en ce qu'**un dispositif palpeur pourvu d'une surface de détection pour détecter le début de la pièce à usiner resp. la fin de la pièce à usiner est monté sur le côté de l'agrégat d'usinage (10) tourné vers le côté frontal d'une pièce à usiner (1).

5. Dispositif selon la revendication 1 ou 4, **caractérisé en ce que** l'agrégat d'usinage est un agrégat de tronçonnage pour couper à longueur des extrémités saillantes de chants avant et arrière sur les pièces à usiner.

6. Dispositif selon l'une des revendications précédentes, **caractérisé en ce qu'**une des premières bielles (80) est reliée à une première commande de pivotement (94) et une des deuxièmes bielles (88) est reliée à une deuxième commande de pivotement (102).

7. Dispositif selon la revendication 6, **caractérisé en ce qu'**au moins une des commandes de pivotement est formée par un dispositif à vérin pneumatique (94, 102).
